# EUROPÄISCHE PATENTSCHRIFT

(11) **EP 1 085 295 B1**
(45) Veröffentlichungstag und Bekanntmachung des Hinweises auf die Patenterteilung: **30.05.2007**
(21) Anmeldenummer: 00115045.7
(22) Anmeldetag: 26.07.2000
(51) Int. Cl.: G08G 1/16

(54) **Verfahren zur verkehrsgeführten Beeinflussung von Kraftfahrzeugen und/oder Unterstützung von Kraftfahrzeugführern**
Method for traffic dependent control of vehicles and/or assisting drivers of vehicles
Procédé de contrôle des véhicules dépendant de trafic et/ou assister les conducteurs des véhicules

(30) Priorität: 14.08.1999 DE 19938691
(43) Veröffentlichungstag der Anmeldung: 21.03.2001
(73) Patentinhaber: Volkswagen Aktiengesellschaft, 38436 Wolfsburg (DE)
(72) Erfinder: Bastian, Andreas, Dr., 38114 Braunschweig (DE)

(56) Entgegenhaltungen:
- EP-A- 0 542 331
- EP-A- 0 921 509
- WO-A-00/05091
- US-A- 5 631 639
- US-A- 5 633 705
- US-A- 5 646 612

## Beschreibung

Die Erfindung betrifft ein Verfahren zur verkehrsgeführten Beeinflussung und/oder Unterstützung von Kraftfahrzeugen bzw. Kraftfahrzeugführern gemäß Oberbegriff des Patentanspruches 1.

Verfahren zur verkehrsgeführten Beeinflussung von Kraftfahrzeugen sind als Navigationssysteme und als abstandsgeregelte Betriebsweisen beim Kraftfahrzeug bekannt. Sie dienen zum einen dazu, entweder in den Fahrbetrieb als solches einzugreifen, wenn der Fahrzeugführer möglicherweise gefährliche Situationen übersieht, oder aber die Einbindung von Navigationssystemen in die Verkehrsführung zu komplettieren.

So ist aus der DE 196 38 703 A1 ein Verfahren bekannt, bei welchem eine Warnung vor einem Hindernis generiert wird, wobei das Verfahren insbesondere im Straßenverkehr eingesetzt wird und das Hindernis aus einem Navigationssystem entnommen wird.

Aus der DE 44 37 365 A1 ist ebenfalls eine Hinderniserfassung bekannt, bei welchem das Hindernis vor einem Kraftfahrzeug ermittelt wird und daraus mittels eines automatisch analytischen Verfahrens eine Gefahrenpotentialsbestimmung erfolgt, die sodann angezeigt wird.

Aus der DE 196 02 766 C2 ist ein Warnsystem mit Bildauswertung und Geschwindigkeitsauswertung bekannt. Hierbei handelt es sich um ein sog. Kollisionswarnsystem, wobei hier jedoch kein aktiver Eingriff auf das Geschehen, sprich auf den Betrieb des Fahrzeuges genommen wird.

Aus der DE 196 48 130 A1 ist es bekannt, geschwindigkeitsbegrenzende Verkehrszeichen erkennen zu können, mit der jeweiligen Anzeige der Geschwindigkeit vorausfahrender Fahrzeuge. Ferner enthält das System Sendemittel zum Übertragen dieser Information auch in das nachfolgende Kraftfahrzeug.

Aus der DE 298 02 953 U1 ist eine Kamera- oder Laserabtastung von Verkehrszeichen bekannt, wobei das Verkehrszeichen mit entsprechenden Erkennungsmerkmalen versehen sein muß. Dabei werden die so erfaßten Verkehrszeichen in einer Anzeige im Kraftfahrzeug wiedergegeben.

Aus der DE 196 12 914 A1 ist eine Verkehrsbeeinflussungseinrichtung bekannt, welche mit Videokameras arbeitet. Die Überwachung des fließenden Verkehrs erfolgt dabei über eine Kamera oder eine Kameraanordnung und steuert im weiteren die Verkehrsbeeinflussungseinrichtung beispielsweise mit Geschwindigkeitsvorgaben.

Aus der DE 197 36 774 A1 ist die Wiedergabe von mit Videokamera erfaßten Verkehrszeichen auf einem Display in der Anzeigeeinheit im Kraftfahrzeug bekannt.

Aus der DE 298 11 287 U1 ist ein Verkehrssicherungssystem mit der Erfassung von Verkehrszeichen bekannt.

Aus der DE 296 19 863 U1 ist es bekannt, eine Geschwindigkeitseinflußnahme durch Motordrosselung aufgrund der Auswertung von Verkehrszeichen vorzunehmen. Die Verkehrszeichen werden hierbei mit einem entsprechenden Sensor erfaßt. Dabei kann vorgesehen sein, daß die Verkehrszeichen mit entsprechenden Sendemitteln ausgestattet sind.

Aus der DE 196 37 053 A1 ist ein Verfahren zur Erkennung von Links- oder Rechtsverkehrs durch die Auswertung der Häufigkeitsverteilungen von seitlich richtungsabhängigen Abständen angegeben. Die Erkennung bzw. Unterscheidung von Rechts- und Linksverkehr ist jedoch nur eine sehr spezifische Aufgabenstellung, der keine allgemeine verkehrstechnische und sicherheitstechnische Bedeutung zukommt.

Aus der EP 0 516 215 B1 ist ein Verfahren zum Zusammentragen von Verkehrsdaten durch anonymen Empfang von ortsabhängigen Ereignisdaten aus Fahrzeugen bekannt. Hierdurch werden also Verkehrsdaten von einzelnen Fahrzeugen erfaßt und möglicherweise einem Zentralsystem bereitgestellt.

Aus der DE 197 38 747 A1 ist es bekannt, eine Fahrzeugbetriebsunterstützung durch Auswertung einer lokalen Situation, beispielsweise einer Kreuzung, und die optimierte Assistenz in der Wahl der Getriebestufe sowohl zum Einfahren in die, als auch Ausfahren aus der Kreuzung angegeben. Hierdurch wird jedoch nicht die Verkehrssituation als Ganzes erfaßt, sondern nur das Durchfahren der besagten Kreuzung technisch durch entsprechende Getriebestufenwahl unterstützt.

Aus der DE 43 27 780 C2 ist ein Navigationssystem mit eigener Positionsbestimmung im navigierten Umfeld bekannt. Dieses System beinhaltet somit nicht nur die kartographischen Daten einer zu befahrenden Strecke, sondern sie führt auch die Positionsbestimmung des eigenen, quasi nachfragenden Fahrzeuges durch, um das Fahrzeug in die Navigationsdaten miteinzubeziehen.

Aus der EP 0 354 562 B1 ist ein Navigationssystem bekannt, welches im allgemeinen Zielführungslinien in einer kartographischen Darstellung auf einem Display anzeigt.

Diesen zitierten Verfahren ist allen gemein, daß sie entweder Strecken oder bestimmte Positionen oder Lokalitäten darstellen, ggf. auf Gefahrenpotentiale hinweisen, aber eine entsprechende Assistenz des Fahrers eigentlich nicht gegeben ist.

Der Erfindung liegt somit die Aufgabe zugrunde, ein Verfahren der gattungsgemäßen Art dahingehend weiterzuentwickeln, daß die optisch oder anders erfaßbaren Umfeld- oder Streckendaten eine direkte Einflußnahme zur Erhöhung der Fahr- bzw. Verkehrssicherheit gewähren.

Die gestellte Aufgabe wird bei einem Verfahren der gattungsgemäßen Art erfindungsgemäß durch die kennzeichnenden Merkmale des Patentanspruches 1 gelöst.

Ein weiteres erfindungsgemäßes Verfahren in diesem Sinne ist in Anspruch 2 angegeben, welches jedoch auch fakultativ in Verbindung mit den Maßnahmen des Verfahrens nach Anspruch 1 angewendet werden kann.

Weitere vorteilhafte Ausgestaltungen der erfindungsgemäßen Verfahren sind in den abhängigen übrigen Ansprüchen angegeben.

Der Kem der Erfindung besteht hierbei darin, daß zur Erkennung einer allgemeinen, geschwindigkeitsreduzierten Stadtverkehrssituation, zur Erkennung örtlicher Gegebenheiten wie Kreuzung/Einmündungen und rechts-vor-links Vorfahrtregeln, sämtliche Objekte samt deren Relativgeschwindigkeit zum Fahrzeug mittels Abstandsmessung erfaßt und die Daten nach Mustern im Sinne der o. g. Verkehrssituationen ausgewertet werden, und daß die Daten zur Einflußnahme auf Beschleunigung und Verzögerung/Bremsung herangezogen werden.

Wichtig ist hierbei, daß das System in einen sog. ADR-Betrieb, also einen abstandsgeregelten Betrieb des Fahrzeuges miteinbezogen wird. Ein weiterer wesentlicher Punkt ist dabei, daß gemäß der Lehre nach Patentanspruch 1 die gesamte Verkehrssituationsbewertung, sogar die Bewertung, ob das Fahrzeug an einer Kreuzung oder Einmündung steht, oder ob Rechts- oder Links-Vorfahrtregeln gegeben sind, durch reine Abstandsermittlung mittels Abstandssensoren, beispielsweise Laserabtastung bewerkstelligt werden kann. Dabei erfaßt der Abstandssensor sämtliche Objekte und deren Geschwindigkeit bzw. Relativgeschwindigkeit zum Fahrzeug. Durch einen entsprechenden Algorithmus betrachtet die Abstandssensorik diese Objekte und stellt anhand ihrer Lage, Bewegungsrichtung und Geschwindigkeiten fest, ob sich das Objekt in einem Stadtverkehr befindet. Somit kann durch diese Vorgehensweise bereits durch reine Abstandssensorik erkannt werden, ob sich das Fahrzeug im Stadtverkehr aufhält. Dies hat zumindest schon geschwindigkeitsbegrenzende Auswirkungen auf den ADR-Betrieb des Kraftfahrzeuges.

Gemäß Patentanspruch 2 können diese Daten im übrigen, wie im Wortlaut des Anspruches 1, jedoch hier durch Bitddaten/Kameradaten erfaßt und ausgewertet werden. Auch hierbei kann dann unter Hinzunahme der Bildinformationen beispielsweise der Klassifizierung der bewegten Objekte, wie Pkw, Lkw, Motorrad, Fahrrad oder Fußgänger, einer Klassifizierung der Verkehrszeichen wie Geschwindigkeitsregelung, Ortsschilder, Verbotsschilder sowie eine Beobachtung der bewegten Objekte relativ zur Kamera, eine Stadtverkehrssituation erkannt werden und eine entsprechende Konsequenz für das ADR ausgelöst werden.

Aus der reinen Abstandssensorbewertung kann auch hergeleitet werden, nämlich in Verbindung mit der Geschwindigkeit und der Richtung der bewegten Objekte sowie die Lage stehender Objekte, ob sich vor dem Fahrzeug oder in erreichbarer Entfernung eine Kreuzung oder Einmündung befindet. Bei einer entsprechend sensiblen Auflösung dieser Abstandsdaten oder des gesamten Abstandsdatenprofiles kann auch eine Kreuzung, also eine lokale Verkehrssituation erkannt werden.

Selbst die Erkennung der rechts-vor-links Vorfahrtregel ist mit Hilfe der reinen Abstandssensorbewertung möglich. Wird beispielsweise der Stadtverkehr und eine Kreuzung oder Einmündung erkannt, so kann durch die Betrachtung der Geschwindigkeit und die Richtung der bewegten Objekte, die rechts-vor-links Regel erkannt werden. Ein Beispiel hierfür. Das eigene ADR-Fahrzeug fährt in großem Abstand hinter einem Fahrzeug her. Nachfolgend wird eine Kreuzung erkannt. Weiterhin wird erfaßt, daß sich ein Fahrzeug von rechts nähert. Das vorausfahrende Fahrzeug fährt weiter, während das von rechts kommende Fahrzeug zum Stillstand kommt. Daraus kann auf Vorfahrt geschlossen werden; im umgekehrten Fall kann auf die rechts-vor-links Regel geschlossen werden. Mit dieser Erkenntnis kann das elektrisch betätigte Gaspedal bzw. der Bremsverstärker der ADR betätigt werden, um das Fahrzeug automatisch an die geltenden Verkehrsregeln anzupassen.

Unter Hinzunahme von Bilddaten bzw. Kameradaten können auch Verkehrssituationen im einzelneren durch eine entsprechende elektronische Bewertung nach Mustererkennungsverfahren zu den abstandsbasierten Verkehrssituationsermittlungen verifizierend hinzugenommen werden.

Zu der Verwendung auch eines Navigationssystemes in Verbindung mit der ansonsten reinen Abstandssensorik, oder in Verbindung mit einer Bilddatenauswertung, oder in Verbindung mit einer Bilddatenauswertung sowie einer Abstandsbewertung, kann auch angegeben werden, daß bei Erfassung immobiler Ortsgegebenheiten, welche im Navigationssystem nicht erfaßt sind, die erfaßten, ausgewerteten Daten zur adaptiven Ergänzung dem Navigationssystem zur Verwertung/Speicherung bereitgestellt bzw zurückgeführt werden.

Dabei können auf die eine oder andere Art und Weise räumliche Objekte mit deren Relativgeschwindigkeit zum Kraftfahrzeug erfaßt werden. Weiterhin ist vorgesehen, daß eine selektive Bewertung der Abstandssensordaten zur Unterscheidung zwischen stehenden und bewegten Objekten erfolgt. Durch die Auswertung von Bild- und/oder Abstandsdaten im Hinblick auf die Verkehrssituation, aber auch die Bewegung der Fahrzeuge zueinander, kann auch eine Bewertung der gesamten Verkehrslage und ggf. der jeweils gültigen Vorfahrtsregeln, wie oben bereits beschrieben, zugelassen sein. Dabei sind alle Maßnahmen, in welcher Unterkombination auch immer, vorteilhaft und können daher auf vorteilhafte Weise in dem abstandsgeregelten Betrieb von Kraftfahrzeugen mitaufgenommen werden.

Besonders vorteilhaft ist die Kombination von Abstandssensor und Navigationssystem sowie Abstandssensor und Kamera.

Ebenso vorteilhaft ist die Kombination von Kamera und Navigationssystem. Auch die reine Bewertung durch Kamera, also Bilddaten, im Sinne der oben ausgeführten Verfahren kann bereits für sich alleine funktionstüchtig mit dem oben dargestellten Ziel eingesetzt werden und mit dem ADR-Betrieb gekoppelt sein.

Die Erfindung ist in der Zeichnung dargestellt und nachfolgend näher beschrieben.

Es zeigt:
- Figur 1:: Logisches Zusammenwirken im erfindungsgemäßen Verfahren.
- Figur 2:: Tabellarische Darstellung kombinierter Bewertung von Verkehrssituationen.

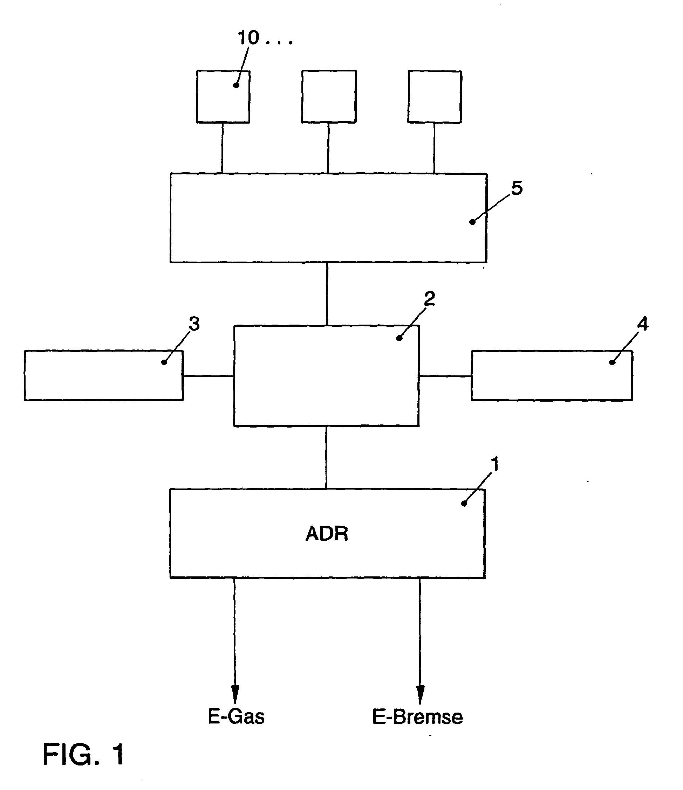

Figur 1 zeigt die schematische, logische Darstellung des Zusammenwirkens der einzelnen verfügbaren Daten und deren Einflußnahme auf die Abstandsregelung im Kraftfahrzeug. Ein Kraftfahrzeug als solches ist hier nicht weiter dargestellt. Zentral im Kraftfahrzeug ist das ADR-System 1 installiert, welches die Abstandsregelung des Fahrzeuges vornimmt. Hierbei wird eine Einflußnahme auf die elektrische Gaspedalbetätigung und die elektrische Bremsbetätigung gegeben. Bei Unterschreitung von Mindestabständen wird eine Verzögerung bzw. eine Bremsung des Fahrzeuges selbsttätig eingeleitet bzw. die vom Fahrer ausgelöste Bremsung in entsprechender Weise verstärkt. In dieses bekannte System eingebunden sind nunmehr weitere Abstandssensoren oder die Abstandssensoren wie für das ADR-System 1 vorgesehen. Die Abstandssensoren 10 sind dabei jedoch mit einer Abstandssensorlogik 5 verschaltet. Die Abstandssensoren 10 sind am Fahrzeug so angeordnet, daß sie eine Rundherumerfassung des Verkehrsgeschehens um das Fahrzeug herum zulassen. Die Abstandssensordaten werden einer Abstandssensorelektronik bzw. einer Abstandssensorlogik 5 zugeführt, in welcher die Abstandssensordaten ausgewertet werden. Denkbar ist hierbei, daß die Abstandssensoren mittels Laserabtastung realisiert sind und daß die abgetasteten Daten ein topographisches Profil der Umgebung generieren. Dabei können über die Abstandssensoren bereits auch ortsfeste von mobilen Objekten unterschieden werden. Alles in allem bedarf es einer entsprechenden Logik, um somit auch ein dynamisches und nicht nur topographisches Profil von der Umgebung zu erhalten.

Die in der Abstandssensorlogik 5 ermittelten bzw. generierten Bilddaten werden sodann einer Auswerteeinheit 2 zugeführt. Innerhalb dieser Auswerteeinheit können Mustervergleiche stattfinden, wobei aber insbesondere der Verkehrssituationsbewertung Aufmerksamkeit gegeben wird. Aus dieser Verkehrssituationsbewertung erfolgt in dieser Auswerteeinheit eine Strategie- und/oder Taktikermittlung für die ADR-Assistenz. Über eine entsprechende logische Verschaltung der Auswerteeinheit 2 mit der ADR-Elektronik der Abstandsregeleinrichtung ist hier eine Einflußnahme strategischer oder taktischer Art auf die elektrische Gaspedalbetätigung oder die elektrische Bremsbetätigung gegeben. Auf diese Weise können Situationen erkannt werden und bereits, bei drohender Gefahr oder einfach zur Fahrerassistenz, Betätigungen des Gaspedals oder der Bremse verstärkt oder abgeschwächt eingesetzt oder unterstützt werden.

Weiterhin kann die Auswerteeinheit 2 mit einer Kamera 4 und/oder einem Navigationssystem 3 mit GPS-Lokalisierung logisch verschaltet sein. Innerhalb der Auswerteeinheit können dann auch mehrere Situationserfassungsmethoden zusammengeführt werden. Hierbei ist dargestellt, daß das gesamte System über alle drei Erfassungssysteme verfügt. Wichtig ist hierbei jedoch darzustellen, daß das gesamte erfindungsgemäße Verfahren bereits auch mit Abstandssensoren 10 und der entsprechenden Abstandssensorlogik sowie Auswerteeinheit 2 und ADR 1 alleine bereits auskommt. Die Einbeziehung von Navigationssystem 3 und/oder Kamera 4 ist nur eine weitere Option, die zu einer verbesserten Selektivität in der Erkennung der Verkehrssituationen führen kann.

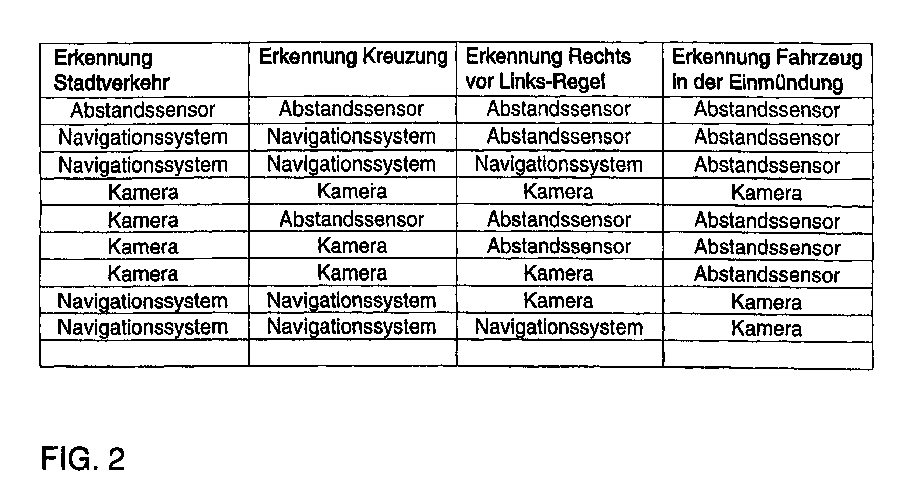

Figur 2 macht deutlich, in welcher Zusammenwirkweise die einzelnen Verkehrssituationen, die im wesentlichen maßgebend sind, erfaßbar sind. Figur 2 zeigt dies in einer tabellarischen Darstellung, bei welcher die Kopfzeilen die vier Verkehrssituationen darstellen. Als erste die Erkennung von Stadtverkehr, Erkennung einer Kreuzung, die Erkennung der rechts-vor-links Vorfahrtregel und die Erkennung eines Fahrzeuges in einer Einmündung. Die darunterliegende erste Zeile zeigt, daß alle vier Verkehrssituationen in einem Ausführungsbeispiel der Erfindung rein über die Abstandssensorik, wie oben beschrieben, erfaßbar sind. In der zweiten Zeile wird kombiniert zwischen der Anwendung der Abstandssensorik in der Verbindung mit dem Navigationssystem. Das Navigationssystem wird dabei eingesetzt in der Erkennung der Stadtverkehrssituation sowie der Erkennung der Kreuzungssituation. Für die Erkennung der rechts-vor-links Vorfahrtregel und die Erkennung eines Fahrzeugs in der Einmündung wird nach wie vor der Abstandssensor eingesetzt. Die dritte Zeile stellt ein Ausführungsbeispiel dar, bei dem für die ersten drei genannten Situationen das Navigationssystem eingesetzt wird und nur für das letztere der Abstandssensor. Die nachfolgende Zeile stellt dar, daß alle vier Verkehrssituationen auch mit Hilfe der Bilddatenauswertung also mit einer Kamera alleine bewertbar sind.

Ein weiteres Ausführungsbeispiel stellt darauf ab, daß für die Erkennung des Stadtverkehrs eine Kamera vorgesehen ist, und für die Erkennung der übrigen drei Verkehrssituationen lediglich die Abstandssensorik ausreicht. Ein nachfolgendes Beispiel tauscht für die Erkennung der Kreuzung die Kamera gegen den Abstandssensor aus und bei einem weiteren Ausführungsbeispiel wird auch die Erkennung der rechts-vor-links Vorfahrtregel von einer Kamera statt von einem Abstandssensor übernommen.

In einem weiteren Ausführungsbeispiel werden Stadtverkehr und Kreuzung durch ein Navigationssystem erkannt und die übrigen beiden Situationen durch eine Kamera. Ein letzteres Ausführungsbeispiel zielt darauf ab, daß die drei erstgenannten Verkehrssituationen ausschließlich über das Navigationssystem und nur die letztgenannte Verkehrssituation über eine Kamera erfaßt wird. In allen dieser genannten Fälle erfolgt eine Taktik- oder Strategieermittlung innerhalb der in Figur 1 dargestellten Auswerteeinheit 2. Diese greift dann in entsprechender Weise auf die ADR-Regelung 1 für die elektrische Gaspedal- und Bremsbetätigung ein. Insgesamt ergibt sich daraus eine optimale ADR-Regelung, die weit über das hinausgeht, was übliche ADR-Verfahren im Straßenverkehr leisten. Das System wird insgesamt intelligenter und sicherer.

## Patentansprüche

1. Verfahren zur verkehrsgeführten Beeinflussung und/oder Unterstützung von Kraftfahrzeugen, bzw Kraftfahrzeugführern,
**dadurch gekennzeichnet,**
**daß** zur Erkennung einer allgemeinen, geschwindigkeitsreduzierten Stadtverkehrssituation, zur Erkennung örtlicher Gegebenheiten wie Kreuzung, Einmündung und rechts-vor-links Vorfahrtregel, sämtliche Objekte samt deren Relativgeschwindigkeit zum Fahrzeug mittels Abstandsmessung erfaßt und die Daten nach Mustern im Sinne der oben genannten Verkehrssituation ausgewertet werden und daß die Daten zur Einflußnahme auf Beschleunigung und Verzögerung/Bremsung herangezogen werden.

2. Verfahren zur verkehrsgeführten Beeinflussung und/oder Unterstützung von Kraftfahrzeugen bzw Kraftfahrzeugführern, insbesondere in Verbindung mit den Merkmalen nach Anspruch 1
**dadurch gekennzeichnet,**
**daß** zur Erkennung einer allgemeinen geschwindigkeitsreduzierten Stadtverkehrssituation, zur Erkennung örtlicher Gegebenheiten wie Kreuzung, Einmündungen und rechts-vor-links Vorfahrtregeln, sämtliche Objekte mit deren Relativgeschwindigkeit zum Fahrzeug mittels Bilddatenauswertung erfaßt und die Daten nach Mustern im Sinne der oben genannten Verkehrssituation ausgewertet werden und daß die Daten zur Einflußnahme auf Beschleunigung und Verzögerung/Bremsung herangezogen werden.

3. Verfahren nach Anspruch 1 oder 2,
**dadurch gekennzeichnet,**
**daß** beim genannten Verfahren auch ein Navigationssystem miteinbezogen wird. Verfahren nach einem der vorhergehenden Ansprüche,
**dadurch gekennzeichnet,**
**daß** die Auswertung der Umfelddaten durch Mustererkennungsverfahren erfolgt.

4. Verfahren nach Anspruch 3 oder einem der übrigen Ansprüche,
**dadurch gekennzeichnet,**
**daß** bei Erfassung immobiler Ortsgegebenheiten, welche im Navigationssystem nicht erfaßt sind, die erfaßten/ausgewerteten Daten zur adaptiven Ergänzung dem Navigationssystem zur Verwertung/Speicherung bereitgestellt werden.

5. Verfahren nach einem der vorhergehenden Ansprüche,
**dadurch gekennzeichnet,**
**daß** eine Erfassung räumlicher Objekte mit deren Relativgeschwindigkeit zum Kraftfahrzeug vorgenommen wird.

6. Verfahren nach Anspruch 6,
**dadurch gekennzeichnet,**
**daß** eine selektive Bewertung der Abstandssensordaten zur Unterscheidung zwischen stehenden und bewegten Objekten vorgenommen wird.

7. Verfahren nach einem der vorhergehenden Ansprüche,
**dadurch gekennzeichnet,**
**daß** aus den Bild- und/oder Abstandsdaten sowohl die Verkehrssituation als auch die Bewegung der Fahrzeuge zueinander, eine Bewertung der Verkehrslage und ggf. der jeweiligen gültigen Vorfahrtsregeln zulassen.

8. Verfahren nach einem der vorhergehenden Ansprüche,
**dadurch gekennzeichnet,**
**daß** durch die Auswertung von Bild- und/oder Abstandsdaten in Hinblick auf die Verkehrssituation, aber auch durch die Bewegung der Fahrzeuge zueinander, eine Bewertung der gesamten Verkehrslage und gegebenenfalls der jeweils gültigen Vorfahrtsregeln zugelassen wird.

9. Verfahren nach einem der vorhergehenden Ansprüche,
**dadurch gekennzeichnet,**
**daß** die besagten Maßnahmen in einen abstandsgeregelten Betrieb von Kraftfahrzeugen mitaufgenommen werden.

## Claims

1. Method for traffic dependent control of motor vehicles and/or assisting motor vehicles and motor vehicle drivers, **characterized in that** in order to detect a general town traffic situation with reduced speed and in order to detect local conditions such as an intersection, a junction and right over left priority rule, all the objects, together with their relative speed in relation to the vehicle, are sensed by means of distance measuring means and the data are evaluated according to patterns in the sense of the abovementioned traffic situation, and **in that** the data are used to influence the acceleration and deceleration/braking.

2. Method for traffic dependent control of motor vehicles and/or assisting motor vehicles and motor vehicle drivers, in particular in conjunction with the features according to Claim 1, **characterized in that** in order to detect a general town traffic situation with reduced speed and in order to detect local conditions such as an intersection, junctions and right over left priority rule, all the objects, together with their relative speed in relation to the vehicle, are sensed by means of image data evaluation means and the data are evaluated according to patterns in the sense of the abovementioned traffic situation, and **in that** the data are used to influence the acceleration and deceleration/braking.

3. Method according to Claim 1 or 2, **characterized in that** a navigation system is also used in the aforesaid method.

4. Method according to one of the preceding claims, **characterized in that** the evaluation of the data relating to the surroundings is carried out by pattern detection methods.

5. Method according to Claim 3 or one of the other claims, **characterized in that** when immobile local conditions which are not sensed in the navigation system are sensed, the sensed/evaluated data are made available to the navigation system for use/storage in order to perform adaptive supplementation.

6. Method according to one of the preceding claims, **characterized in that** spatial objects are sensed together with their relative speed in relation to the motor vehicle.

7. Method according to Claim 6, **characterized in that** selective evaluation of the distance sensor data is carried out in order to differentiate between stationary objects and moving objects.

8. Method according to one of the preceding claims, **characterized in that** assessment of the entire traffic situation and, if appropriate, of the respectively valid traffic regulations is made possible by evaluating image and/or distance data with respect to the traffic situation and also by the movement of the vehicles in relation to one another.

9. Method according to one of the preceding claims, **characterized in that** the aforesaid measures are also incorporated into a distance-regulated operating mode of motor vehicles.

## Revendications

1. Procédé pour influencer en fonction du trafic et/ou pour assister des véhicules automobiles ou des conducteurs de véhicules automobiles, **caractérisé en ce que** pour l'identification d'une situation générale de trafic urbain à vitesse réduite, pour l'identification de conditions locales, telles qu'un carrefour, une jonction de routes et des règles de priorité à droite, tous les objets sont détectés, avec leur vitesse relative par rapport à celle du véhicule par mesure de la distance et les données sont évaluées selon des modèles dans le sens de la situation de trafic précédemment mentionnée et **en ce que** les données sont impliquées pour influencer l'accélération et la décélération/le freinage.

2. Procédé pour influencer en fonction du trafic et/ou pour assister des véhicules automobiles ou des conducteurs de véhicules automobiles, notamment en association avec les attributs selon la revendication 1, **caractérisé en ce que** pour l'identification d'une situation générale de trafic urbain à vitesse réduite, pour l'identification de conditions locales, telles qu'un carrefour, une jonction de routes et des règles de priorité à droite, tous les objets sont détectés, avec leur vitesse relative par rapport à celle du véhicule au moyen d'une évaluation des données image et les données sont évaluées selon des modèles dans le sens de la situation de trafic précédemment mentionnée et **en ce que** les données sont impliquées pour influencer l'accélération et la décélération /le freinage.

3. Procédé selon la revendication 1 ou 2, **caractérisé en ce qu'**un système de navigation est également impliqué dans le procédé cité.

4. Procédé selon l'une quelconque des revendications précédentes, **caractérisé en ce que** l'évaluation des données environnementales est effectuée par procédé d'identification de modèles.

5. Procédé selon la revendication 3 ou l'une des autres revendications, **caractérisé en ce que**, pour un complément adaptatif, lors de la détection de conditions locales immobiles, qui ne sont pas détectées dans le système de navigation, les données détectées/évaluées sont mises à disposition du système de navigation pour l'évaluation/la mémorisation.

6. Procédé selon l'une quelconque des revendications précédentes, **caractérisé en ce que** l'on procède à une détection d'objets volumiques avec leur vitesse relative par rapport au véhicule.

7. Procédé selon la revendication 6, **caractérisé en ce que** l'on procède à une évaluation sélective des données de capteurs concernant la distance, pour différencier les objets stagnants des objets en mouvement.

8. Procédé selon l'une quelconque des revendications précédentes, **caractérisé en ce qu'**une évaluation des données image et/ou des données de distance relatives à la situation du trafic, ainsi que le déplacement relatif des véhicules permettent de procéder à une analyse de la situation globale du trafic et le cas échéant des règles de priorité respectivement en vigueur

9. Procédé selon l'une quelconque des revendications précédentes, **caractérisé en ce que** les mesures citées sont également impliquées dans un fonctionnement régulé par distance de véhicules automobiles.
